## Europäisches Patentamt

## European Patent Office

## Office européen des brevets

(19)

(11) Veröffentlichungsnummer: **0 003 127**
**B1**

(12) **EUROPÄISCHE PATENTSCHRIFT**

(45) Veröffentlichungstag der Patentschrift:
07.07.82

(21) Anmeldenummer: **79100056.5**

(22) Anmeldetag: **09.01.79**

(51) Int. Cl.³: **A 47 J 37/07**

(54) **Tragbares Grillgerät.**

(30) Priorität: **10.01.78 DE 2800857**

(43) Veröffentlichungstag der Anmeldung:
**25.07.79 Patentblatt 79/15**

(45) Bekanntmachung des Hinweises auf die Patenterteilung:
**07.07.82 Patentblatt 82/27**

(84) Benannte Vertragsstaaten:
**BE CH FR GB IT LU NL SE**

(56) Entgegenhaltungen:
**DE-A-2 131 031**
**FR-A-1 330 361**
**US-A-2 447 529**

(73) Patentinhaber: **EW Grosshandel GmbH & Co. KG,
Industriestrasse 10, D-2803 Weyhe-Dreye (DE)**

(72) Erfinder: **Schmidt, Klaus, Luisenstrasse 3,
D-2863 Ritterhude (DE)**

(74) Vertreter: **Zinngrebe, Horst, Dr.rer.nat. et al,
Patentanwälte Dipl.-Ing. G. Schliebs Dr.rer.nat. Horst
Zinngrebe Claudiusweg 17 A, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Tragbares Grillgerät

Die Erfindung betrifft ein Grillgerät mit einem Kohlebecken, an dem Beine und ein Deckel gelenkig befestigt sind, einem Rost, einem an der Vorderwand des Kohlebeckens angeordneten Tragegriff und einem Verschlussbügel zum Verschliessen des Grillgerätes.

Ein derartiges tragbares Grillgerät mit einem Kohlebecken, einem Rost sowie an dem Kohlebecken gelenkig befestigten Beinen ist aus der US-A-24 777 529 bekannt. Darüber hinaus ist bei dem bekannten Grillgerät auf der einen Seite des Kohlebeckens über ein Scharnier ein Deckel befestigt und in einer Vorderwand des Kohlebeckens ein klappbarer Handgriff ausgebildet.

Schliesslich ist dieses Grillgerät noch mit Verschlussbügeln versehen, die das Grillgerät im zusammengeklappten Zustand verschliessen und im ausgeklappten Zustand als Standbeine für das Kohlebecken dienen.

Der Erfindung liegt die Aufgabe zugrunde, ein kleines, zu einem einteiligen Koffer zusammenlegbares Grillgerät zu schaffen, das im geschlossenen Zustand einen minimalen Raumbedarf beansprucht und leicht transportiert werden kann, ohne dass das Kohlebecken selbst angefasst werden muss.

Diese Aufgabe wird erfindungsgemäss dadurch gelöst, dass der Tragegriff an der Vorderkante des Rostes ausgebildet ist und dass an der Vorderwand des Kohlebeckens und oder des Deckels vom Rand her senkrechte Schlitze geschnitten sind, durch welche sich der Tragegriff bei geschlossenem Grillgerät erstreckt.

Die durch die Erfindung erzielbaren Vorteile bestehen hauptsächlich darin, dass ein im ausgeklappten Zustand vollwertiges tragbares Grillgerät im zusammengeklappten Zustand geringst möglichen Platz beansprucht. Im zusammengeklappten Zustand lässt sich das Grillgerät leicht und sicher durch eine stabile Konstruktion des Tragegriffes transportieren, ohne dass das Kohlebecken selbst angefasst werden muss.

Die Leistungsfähigkeit des Grillgerätes lässt sich dadurch steigern, dass nach der Erfindung der Deckel als zweites Kohlebecken ausgebildet ist und einen zweiten Rost aufweist, wobei das zweite Kohlebecken neben das erste Kohlebecken auf gegebenenfalls eigene Füsse geschwenkt werden kann. Die Füsse des zweiten Kohlebeckens ergeben sich durch zweckmässige Formung des Bügels in seinem ausgeklappten Zustand. Wenn auf das erste Kohlebecken ein Blech aufgelegt wird, dann sammelt dies das vom Grillgut abtropfende Fett bei Bräunen des Grillgutes in vertikaler Stellung des zweiten Kohlebeckens. Dazu erweist es sich als vorteilhaft, dass der Deckel oder das zweite Kohlebecken durch wenigstens eine an einer Seitenwand des ersten Kohlebeckens befestigte Hakenvorrichtung in einer im wesentlichen vertikalen Stellung festlegbar ist.

Weitere vorteilhafte Ausführungsformen der Erfindung sind Gegenstand von Unteransprüchen.

Die Erfindung wird nachstehend an einem in den beigefügten Zeichnungen dargestellten bevorzugten Ausführungsbeispiel erläutert. Es zeigen:

Fig. 1 ein mit den Merkmalen der Erfindung ausgestattetes, geschlossenes Grillgerät in perspektivischer Ansicht;

Fig. 2 eine schematische perspektivische Ansicht des voll aufgeklappten Grillgeräts;

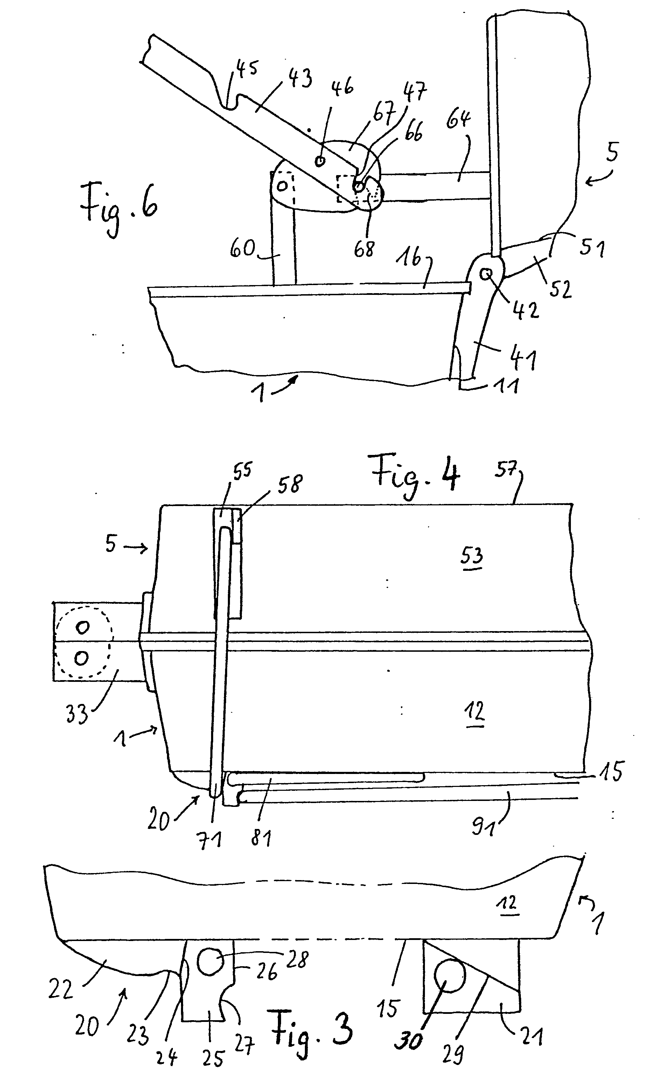

Fig. 3 eine vergrösserte Teilansicht des erfindungsgemässen Grillgeräts zur Erläuterung der Beinhalter;

Fig. 4 eine vergrösserte Darstellung des vorderen Teiles des geschlossenen Grillgeräts;

Fig. 5 eine schematische Schnittdarstellung des erfindungsgemässen Grillgeräts mit vertikal gestelltem zweiten Kohlebecken, das von der Haltevorrichtung gehalten ist; und

Fig. 6 eine Ansicht der Haltevorrichtung für den vertikal gestellten Deckel.

Das erfindungsgemässe Grillgerät besteht aus einem ersten Kohlebecken 1, einem als zweites Kohlebecken ausgebildeten Deckel 5, einem vorderen Standbügel 8, einem hinteren Standbügel 9, welche unter dem Boden 15 des ersten Kohlebeckens befestigt sind, aus einem Verschlussbügel 7 sowie mindestens einem Rost 3 mit Tragegriff 31.

Das erste Kohlebecken hat die Form eines oben offenen, im wesentlichen rechtwinkligen Kastens, wobei die Rückwand 11, die linke und rechte Seitenwand 12, 13 sowie die Vorderwand 14 zum Boden 15 nach innen schräg stehen. An der Oberkante der Rückwand 11, linker Seitenwand 12, Vorderwand 14, rechter Seitenwand 13, läuft ein Verstärkungsrand 16 um, welcher mit dem oberen Verstärkungsrand 56 des Deckels 5 durch einen angeformten umlaufenden Absatz nach Art einer Nut- und Federverbindung im wesentlichen dichtend zusammenwirkt.

Die Vorderwand 14 weist symmetrisch zur Mitte angeordnete, von der Oberkante ausgehende senkrechte Schlitze 17, 18 auf, auf deren Bedeutung noch weiter unten eingegangen wird.

An den Boden 15 des ersten Kohlebeckens 1 sind im Bereich der vier Ecken je ein Lagerklotz angeformt, von denen in den Zeichnungen nur der rechte vordere Lagerklotz 20 und der rechte hintere Lagerklotz 21 dargestellt sind. Der linke vordere Lagerklotz und der linke hintere Lagerklotz gleichen den dargestellten spiegelbildlich. Der rechte vordere Lagerklotz 20 weist einen vorderen Auflaufabschnitt 22 auf, der sich nach vorne zu verjüngt und im hinteren Teil mit einer geringfügig vertieften Kehle 23 endet. Zum Boden 15 hin schliesst sich an die Kehle 23 eine ebene, geringfügig nach vorne aus der Vertikalen geneigte Anschlagfläche 24 für den rechten Schenkel 81 des vorderen Standbügels an.

Der hintere Teil 25 des vorderen Lagerklotzes 20 weist an der nach hinten weisenden Fläche 26 eine weitere Kehle 27 zur Aufnahme des hinteren Standbügels 9 auf. Diese weitere Kehle 27 ist in einem Abstand aus dem hinteren Teil 25 ausgenommen, der etwas grösser als die Stärke des vorderen Standbügels 8 ist. Zwischen der weiteren Kehle 27 und dem Boden 15 ist in den hinteren Teil 25 ein Loch 28 zur Aufnahme eines rechtwinklig umgebogenen Endes des vorderen Standbügels eingebohrt.

Der hintere Lagerklotz 21 ist an seiner seitlichen Aussenfläche diagonal abgestuft, so dass sich eine schräg nach hinten unten verlaufende, nach unten weisende Anschlagschulter 29 für den hinteren Standbügel 9 ergibt. Die Anschlagschulter ist dabei unter solchem Winkel gegen den Boden 15 geneigt, dass das geöffnete Grillgerät mit in noch zu erläuternder Weise im wesentlichen vertikal, jedoch leicht schräg nach hinten stehendem Deckel 5 bei einer durch den Abstand zwischen weiterer Kehle 27 und hinterem Lagerklotz 21 definierter Länge eines Schenkels 91 des hinteren Standbügels eine hinreichend grosse, einen stabilen Stand garantierende Standfläche erhält. In dem unter der Anschlagschulter 29 zurückgesetzten Teil der seitlichen Aussenfläche des hinteren Lagerklotzes 21 ist eine Bohrung 30 eingebracht, in welche das rechtwinklig umgebogene freie Ende des Schenkels 91 des hinteren Standbügels 9 eingesetzt ist.

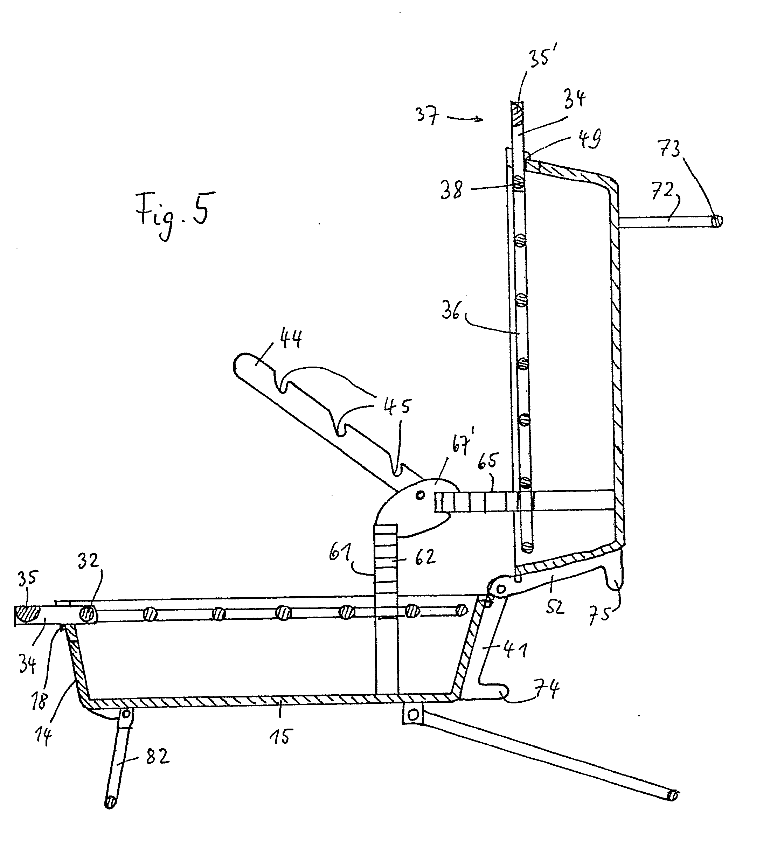

An der Rückwand 11 des ersten Kohlebeckens 1 stehen in der Nähe jeder Seitenkante je eine Rippe vor, von denen in Fig. 5 nur die rechte Rippe 41 dargestellt ist. In Höhe des Verstärkungsrandes 16 sind die Rippen 41 zum Durchführen eines Scharnierstabes 42 fluchtend durchbohrt. An der Rückwand 51 des Deckels 5 sind in der Nähe jeder Seitenkante zwei weitere Rippen angeformt, von denen in Fig. 5 die rechte Rippe dargestellt ist. In der Höhe des Verstärkungsrandes 16 sind die weiteren Rippen 52 fluchtend durchbohrt, so dass sie in den Scharnierstab 42 eingehängt werden können.

An die beiden Seitenwände 53, 54 des Deckels 5 ist über den vorderen Lagerklötzen 20 ein Ansatz 55 angeformt, welcher in der Nähe des Deckelbodens 57 am rückwärtigen Ende einen Vorsprung 58 aufweist. Der Vorsprung 58 bildet einen rückwärtigen Anschlag für den Verschlussbügel 7. Unterhalb des Vorsprungs 58 ist in den Ansatz 55 ein Blindloch zur Aufnahme des rechtwinklig umgebogenen Endes des Schenkels 71 eingebohrt.

Zum Verschliessen des Grillgerätes wird nach Auflegen des um den Scharnierstab 42 drehbaren Deckels 5 der Verschlussbügel 7 aus der in Fig. 5 dargestellten Stellung nach vorne um etwa 180° gedreht, so dass der die beiden Schenkel verbindende Basisabschnitt 73 des Verschlussbügels 7 über den Auflaufabschnitt 22 geschoben wird und durch Einrasten in die Kehle 23 seine untere Endstellung einnimmt. Der obere Verstärkungsrand 56 liegt dann wie erwähnt dichtend auf dem unteren Verstärkungsrand 16. Ferner wird der U-förmig gebogene vordere Standbügel gegen den Boden 15 geklappt (die Länge des Schenkels 81 ist wesentlich kleiner als der Abstand der Lagerklötze 20, 21), und der hintere, U-förmig gebogene Standbügel 9 wird ebenfalls gegen den Boden 15 und den vorderen Standbügel 8 geklappt, bis er in der weiteren Kehle 27 einrastet. Das Grillgerät ist in diesem Zustand verschlossen und transportfähig und nimmt minimalen Raum ein.

An dem aus dem üblichen Drahtgitter bestehenden Rost ist an der Vorderkante ein Tragegriff 31 befestigt, der aus zwei mit der Rostvorderkante 32 verbundenen Haltestegen 33, 34 und einem wärmefesten und thermisch isolierenden Handgriff 35 besteht, welcher zwischen den Haltestegen 33 und 34 an deren vorderem Ende befestigt ist. Die oben erwähnten Schlitze 17 und 18 sind so tief in die Vorderwand 14 eingeschnitten, dass sie die Haltestege 33, 34 glatt aufnehmen können. Bei geschlossenem Grillgerät steht dann der Tragegriff 31 vor, so dass das Grillgerät am Handgriff 35 getragen werden kann, ohne dass das Kohlebecken selbst angefasst werden muss.

In dem Kohlebecken 1 sind im hinteren Bereich der Innenflächen der beiden Seitenwände 12, 13 je eine als Zahnstange ausgebildete Haltevorrichtung 60, 61 sich über den Verstärkungsrand 16 erhebend befestigt. Je nach dem gewünschten Abstand des Rostes über dem oberen Rand des Kohlebeckens 1 wird der Rost 3 entweder zwischen die unteren Zähne oder in den obersten Zahn 62 von vorne eingeschoben.

Im hinteren Bereich der Innenflächen jeder Seitenwand 54, 53 des Deckels 5 sind weitere Haltevorrichtungen 64, 65 befestigt, welche sich über den oberen Verstärkungsrand 56 und damit über das zweite Kohlebecken hinaus erheben und im oberen Teil als Zahnstange zur Aufnahme eines weiteren Rostes 36 für das zweite Kohlebecken in verschiedener Höhe über dem oberen Verstärkungsrand 56 ausgebildet sind. An der den Zähnen gegenüberliegenden Aussenfläche der weiteren Zahnstangen ist ein Zapfen 66 aufgesetzt. An der von den Zähnen 62 wegweisenden Aussenfläche der Zahnstangen 60, 61 ist im oberen Teil ein Haken 67 verschwenkbar befestigt. Das in Fig. 6 punktiert angedeutete schlitzförmige Maul 68 des Hakens kann den Zapfen 66 von oben einfangen, so dass eine lösbare Verbindung zwischen den Rost-Haltevorrichtungen 60, 61 des ersten Kohlebeckens 1 und 64, 65 des zweiten Kohlebeckens hergestellt ist. Der Zapfen 66 ist so auf der Haltevorrichtung 64 angeordnet, dass das zweite Kohlebecken in einer praktisch vertikalen Lage relativ zum ersten Kohlebecken arretiert ist. Wegen des weit nach hinten ausgreifenden hinteren Standbügels 9, welcher mit Abstand hinter dem Deckelboden 57 auf der Unterlage aufsteht, bleibt auch bei hochgestelltem zweitem Kohlebecken ein sicherer Stand des erfindungsgemässen Grillgeräts gewahrt.

An jedem Haken 67 ist ein Haltearm 43, 44 angelenkt, aus dessen frei abstehendem langen Ende nach oben offene Haltenuten 45 zur Aufnahme des nicht dargestellten Grillspiesses in wählbarer Höhe über dem ersten oder dem zweiten Kohlebecken (wenn dieses sich in der vertikalen Stellung befindet) ausgeschnitten sind (Fig. 5). In einem Abstand vom Anlenkpunkt 46, der gleich dem Abstand des Anlenkpunktes 46 am Haken 67 vom

inneren Ende des Mauls 68 ist, weist jeder Haltearm 43, 44 eine Arretiernut 47 zum Einfangen des äusseren Endes des Zapfens 66 von unten auf. Auf diese Weise wirkt der Zapfen 66 auch als Widerlager zum Abstützen des zugehörigen Haltearms 43. Gleichzeitig arretiert der Haltearm 43 den Haken 67 am Zapfen 66, so dass das zweite Kohlebecken oder der Deckel 5 sicher in der vertikalen Stellung gehalten ist und nicht unbeabsichtigt aus dieser nach vorne auf das erste Kohlebecken 1 oder nach hinten fallen kann. Der Anlenkpunkt 46 ist im Verhältnis zur Lage des Zapfens 66 ferner so gewählt, dass der zugehörige Haltearm 43 in Betriebsstellung etwa längs der Winkelhalbierenden zwischen dem ersten und zweiten Kohlebecken sich erstreckt. Auf diese Weise kann das Grillgut sowohl von der Seite wie von unten gleichmässig vorgegart und gleichzeitig gebräunt werden. Auch ein Garen oder Bräunen nur von der Seite ist nach Wahl möglich, wenn der Deckel 5, wie dargestellt, als zweites Kohlebecken ausgebildet ist. In diesem Fall können gleichzeitig mit dem Grillen mittels des hochgestellten zweiten Kohlebeckens auf dem Rost 3 des ersten Kohlebeckens Würstchen oder Steaks gegrillt werden.

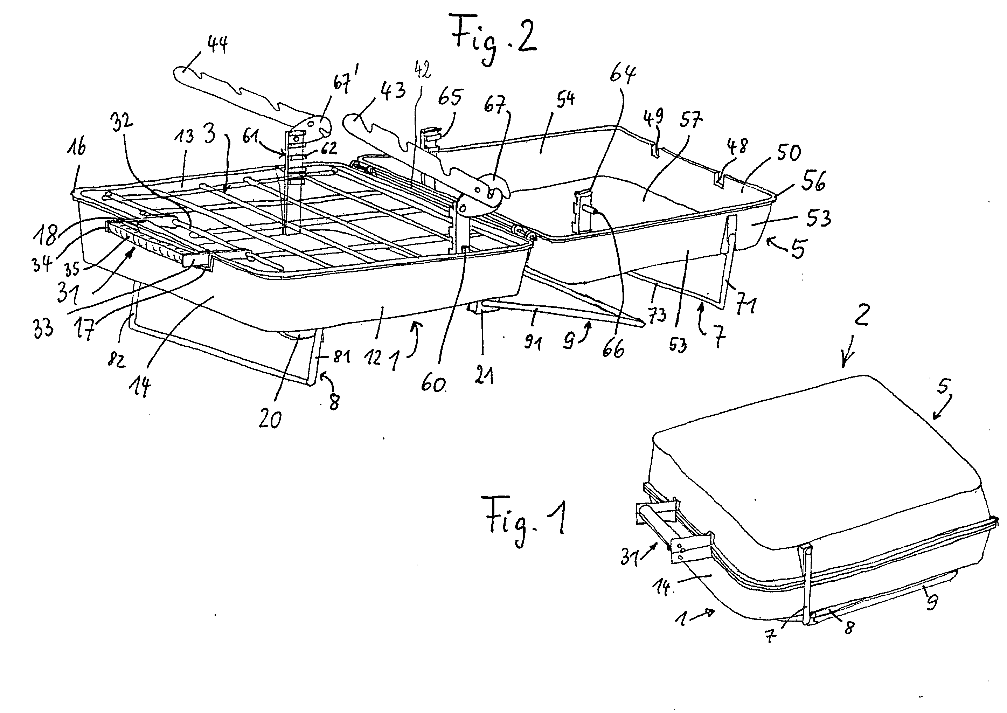

Die Bratfläche kann mit dem erfindungsgemässen Grillgerät jedoch noch dadurch vergrössert werden, dass die Arretierung des zweiten Kohlebeckens in der Vertikalstellung mittels Haltearm und Haken gelöst und das zweite Kohlebecken neben das erste Kohlebecken geklappt wird (Fig. 2). Das zweite Kohlebecken 5 ruht dann auf dem als Stütze dienenden Verschlussbügel 7 in seiner aufgeklappten Stellung. Der weitere Rost 36 ist an seiner Vorderkante mit einem weiteren Tragegriff 37 versehen, der ähnlich ausgebildet ist wie der Tragegriff 31. Im einzelnen sind an der Vorderkante 38 des weiteren Rostes weitere Haltestege 33 und 34 befestigt, die über die Vorderwand 50 des zweiten Kohlebeckens vorstehen und zwischen sich einen Handgriff 35' halten. In die Vorderwand 50 sind dazu Schlitze 48, 49 vom Rand her eingeschnitten, durch die sich die weiteren Haltestege 33, 34 bei geschlossenem Grillgerät erstrecken können. Um in voll aufgeklapptem Zustand des zweiten Kohlebeckens eine ungefähr ebene, nahezu durchgehende Rostfläche, bestehend aus Rost 3 und weiterem Rost 36, zu erhalten, ist die Länge der Schenkel 71, 72 des Verschlussbügels 7 im wesentlichen gleich der Länge der Schenkel 81, 82 des vorderen Standbügels, und die Neigung der Anschlagschulter 29 ist so gewählt, dass auch der mittlere Teil am Scharnier 42 des Grillgeräts die gleiche Höhe wie die übrigen Teile des Grillgeräts über der Standfläche einhalten.

An die Rippen 41, 52 können nach rückwärts vorspringende Füsse 74, 75 angeformt sein, welche das Abstellen des geschlossenen Grillgeräts 2 erleichtern.

In Fig. 2 ist der weitere Rost 36 zur besseren Übersicht weggelassen. An die Haltevorrichtung 65 ist selbstverständlich ein dem Zapfen 66 entsprechender weiterer Zapfen angeformt, der vom Haken 67' sowie dem Haltearm 44 ergriffen werden kann.

Bei voll aufgeklapptem Grillgerät (Fig. 2) können in die Haltevorrichtungen 60 und 61 weitere Stifte od. dgl. eingesetzt werden, die die Haken 67, 67' mit den Haltearmen 43, 44 auf Wunsch in angehobener Stellung fixieren, damit etwa über dem ersten Kohlebecken 1 gegrillt und auf dem zweiten Kohlebecken 5 gebraten werden kann.

**Patentansprüche**

1. Grillgerät (2) mit einem Kohlebecken (1), an dem Beine (8, 9) und ein Deckel (5) gelenkig befestigt sind, einem Rost (3), einem an der Vorderwand (14) des Kohlebeckens (1) angeordneten Tragegriff (31, 37) und einem Verschlussbügel (7) zum Verschliessen des Grillgerätes (2), dadurch gekennzeichnet, dass der Tragegriff (31) an der Vorderkante (32) des Rostes (3) ausgebildet ist und dass in der Vorderwand (14) des Kohlebeckens (1) und/oder des Deckels (5) vom Rand her senkrechte Schlitze (17,18; 48, 49) geschnitten sind, durch welche sich der Tragegriff (31, 37) bei geschlossenem Grillgerät (2) erstreckt.

2. Grillgerät nach Anspruch 1, dadurch gekennzeichnet, dass in der Vorderwand (14) des Kohlebeckens (1) ein thermisch isolierter Tragegriff (31) ausgebildet ist.

3. Grillgerät nach Anspruch 1 oder 2, dadurch gekennzeichnet, dass an der Rückwand (11) des Kohlebeckens (1) und vorzugsweise des Deckels (5) insgesamt vier nach rückwärts vorstehende Füsse (74, 75) angeformt sind.

4. Grillgerät nach einem der vorstehenden Ansprüche, dadurch gekennzeichnet, dass die an dem Boden (15) des Kohlebeckens (1) gelenkig befestigten Beine (8, 9) unter den Boden (15) klappbar sind.

5. Grillgerät nach einem der vorstehenden Ansprüche, dadurch gekennzeichnet, dass der Verschlussbügel (7) an dem an der Rückwand (11) des Kohlebeckens (1) eingehängten Deckel (5) angelenkt ist.

6. Grillgerät nach einem der vorstehenden Ansprüche, dadurch gekennzeichnet, dass die Beine (8, 9) aus einem Paar U-förmig gebogener Standbügel bestehen, von denen jeder mit den Enden in zwei an gegenüberliegenden Seiten angeformten Lagerklötzen (20, 21) eingehängt ist, wobei an jedem Lagerklotz eine schräg nach aussen sich erstreckende Anschlagfläche (24, 29) für einen Schenkel (81, 91) des zugehörigen Standbügels (8, 9) vorgesehen ist.

7. Grillgerät nach einem der vorstehenden Ansprüche, dadurch gekennzeichnet, dass der Deckel (5) an seiner Rückwand (51) in ein Scharnier (42) bleibend eingehängt ist.

8. Grillgerät nach einem der vorstehenden Ansprüche, dadurch gekennzeichnet, dass der Deckel (5) als zweites Kohlebecken ausgebildet ist und einen zweiten Rost (36) aufweist, wobei das zweite Kohlebecken neben das erste Kohlebecken verschwenkbar ist.

9. Grillgerät nach Anspruch 8, dadurch gekennzeichnet, dass das zweite Kohlebecken (5) mit wenigstens zwei eigenen Beinen ausgerüstet ist, die an den Boden des zweiten Kohlebeckens klappbar sind.

10. Grillgerät nach Anspruch 8, dadurch gekennzeichnet, dass der U-förmig gebogene, die Beine für das zweite Kohlebecken bildende Verschlussbügel (7) an den seitlichen Oberkanten des Deckels (5) angelenkt ist und beiderseits gegen je eine im wesentlichen vertikale Anschlagkante (58) anlegbar ist, wobei die Länge des Schenkels (71, 72) des Verschlussbügels (7) geringfügig grösser ist als die addierten Tiefen des ersten und zweiten Kohlebeckens.

11. Grillgerät nach einem der vorstehenden Ansprüche, dadurch gekennzeichnet, dass der Dekkel (5) durch wenigstens eine an einer Seitenwand des Kohlebeckens (1) befestigte Hakenvorrichtung in einer im wesentlichen vertikalen Stellung festlegbar ist.

12. Grillgerät nach Anspruch 11, dadurch gekennzeichnet, dass an jeder seitlichen Innenwand des ersten Kohlebeckens (1) je ein Haken (67) schwenkbar befestigt ist, welcher in je einen Zapfen (66) einhängbar ist, der aus jeder seitlichen Innenwand des Deckels (5) vorsteht.

13. Grillgerät nach Anspruch 12, dadurch gekennzeichnet, dass jeder Haken (67) an einer ersten Zahnleiste (60, 61) befestigt ist, welche mit der seitlichen Innenwand des ersten Kohlebekkens verbunden ist, wobei zwischen je zwei Zähnen (62) der ersten Zahnleiste der Rost (3) einschiebbar ist.

14. Grillgerät nach einem der Ansprüche 8–13, dadurch gekennzeichnet, dass jeder Zapfen (66) an einer zweiten Zahnleiste (64) befestigt ist, welche mit der seitlichen Innenwand des zweiten Kohlebeckens verbunden ist, wobei zwischen je zwei Zähnen (65) der zweiten Zahnleiste (64) der weitere Rost (36) einschiebbar ist.

15. Grillgerät mit einer über dem Kohlebecken angeordneten Grillspiess-Halteeinrichtung, nach einem der Ansprüche 11–13, dadurch gekennzeichnet, dass der Haken am unteren Ende eines mit nach oben offenen Lagernuten (45) versehenen Haltearmes (43, 44) ausgebildet ist.

16. Grillgerät nach Anspruch 15, dadurch gekennzeichnet, dass der Haltearm (43, 44) an dem Haken (67) angelenkt ist und eine von oben offene Arretiernut (47) zum Unterfassen des Zapfens (66) aufweist.

17. Grillgerät nach einem der vorstehenden Ansprüche, dadurch gekennzeichnet, dass das oder die Kohlebecken aus Gusseisen bestehen.

## Claims

1. Grill device (2) having a coal box (1) to which legs (8, 9) and a cover (5) are pivotably mounted, the device having a grate (3) and a carrying handle (31, 37) provided at the front wall (14) of the coal box (1) and having a closing bail (7) for closing the grill device (2) characterized in that the carrying handle (31) is formed at the front end (32) of the grate (3) and that vertical slots (17, 18, 48, 49) are cut within the front wall (14) of the coal box (1) and/or the cover (5), the slots extending from the run inwardly, the carrying handle (31, 37) extending through the slots when the grill device (2) is in closed condition.

2. Grill device according to claim 1, characterized in that a thermally isolated carrying handle (31) is formed within the front wall (14) of the coal box (1).

3. Grill device according to claim 1 or 2, characterized in that four feet (74, 75) projecting rearwardly are formed from the rear wall (11) of the coal box (1) and preferably from the cover (5).

4. Grill device according to anyone of the preceding claims, characterized in that the legs (8, 9) pivotably mounted to the bottom (15) of the coal box (1) are adapted to be fold to the bottom (15).

5. Grill device according to anyone of the preceding claims, characterized in that the closing bail (7) is pivotably mounted to the cover (5) hung to the rear wall (11) of the coal box (1).

6. Grill device according to anyone of the preceding claims, characterized in that the legs (8, 9) comprise a pair of U-shaped leg bails each of which is hung by its ends to two mounting blocks (20, 21) formed from opposite sides, an abutment surface (24, 29) extending obliquely outwardly being provided at each mounting block (20, 21) for one of the shanks (81, 91) of the associated leg bail (8, 9).

7. Grill device according to anyone of the preceding claims, characterized in that the cover (5) is hung permanently into a hinge (42) at its rear wall (51).

8. Grill device according to anyone of the preceding claims, characterized in that the cover (5) forms a second coal box and includes a second grate (36), the second coal box being adapted to be swung to a position adjacent the first coal box.

9. Grill device according to claim 8, characterized in that the second coal box (5) is provided with at least two individual legs adapted to be folded to the bottom of the second coal box.

10. Grill device according to claim 8, characterized in that the U-shaped closing bail (7) forming the leg for the second coal box is pivotably mounted to the lateral upper ends of the cover (5) and is adapted to engage substantially vertical abutment edges (58) each being provided on either sides, the length of the shank (71, 72) of the closing bail (7) being slightly greater than the sum of the depths of the first and second coal boxes.

11. Grill device according to anyone of the preceding claims, characterized in that the cover (5) may be held fixedly in a substantially vertical position by at least one hook means mounted to a side wall of the coal box (1).

12. Grill device according to claim 11, characterized in that hooks (67) are pivotably mounted, one to each lateral inner surface of the first coal box (1), each hook being adapted to be hung onto a pin (66) projecting from the lateral inner surface of the cover (5).

13. Grill device according to claim 12, characterized in that each hook (67) is mounted to a rack (60, 61) connected to the lateral inner surface of the first coal box, the space between every two teeth (62) of the rack allowing insert of the grate (3) between the teeth.

14. Grill device according to anyone of claims 8–13, characterized in that each pin (66) is mounted to a second rack (64) connected to the lateral inner surface of the second coal box, the space between every two teeth (65) of the second rack (64) allowing insert of the further grate (36) between the teeth.

15. Grill device having a grill spit holding means provided above the coal box according to anyone of claims 11–13, characterized in that the hook is formed from the lower end of a holding arm (43, 44) provided with supporting grooves (45) open upwardly.

16. Grill device according to claim 15, characterized in that the holding arm (43, 44) is pivotably mounted to the hook (67) and includes a locking groove (47) open upwardly for engaging the lower side of the pin (66).

17. Grill device according to anyone of the preceding claims, characterized in that the coal box, or the coal boxes, are formed from cast iron.

## Revendications

1. Barbecue (2) comprenant un réceptacle de charbon (1) auquel des jambes (8, 9) et un couvercle (5) sont fixés par articulations, un gril (3), une poignée de transport (31, 37) disposée à la paroi avant (14) du réceptacle (1) et une anse de fermeture (7) pour verrouiller le barbecue (2) caractérisé en ce que la poignée de transport (31) est prévue sur le bord avant (32) du gril (3) et en ce que dans la paroi avant (14) du réceptacle de charbon (1) et/ou du couvercle (5) sont pratiquées des saignées (17, 18; 48, 49) verticales à partir du bord dans lesquelles la poignée de transport (31, 37) pénètre lors de la fermeture du barbecue (2).

2. Barbecue conforme à la revendication 1, caractérisé en ce que dans la paroi avant (14) du réceptacle de charbon (1) est prévue une poignée de transport (31) thermo-isolante.

3. Barbecue conforme à la revendication 1 ou 2, caractérisé en ce qu'à la paroi arrière (11) du réceptacle de charbon (1) et de préférence de couvercle (5) sont prévus en tout quatre pieds (74, 75) saillant vers l'arrière.

4. Barbecue conforme à l'une des revendications précédentes, caractérisé en ce que les jambes (8, 9) fixées par articulation au fond (15) du réceptacle de charbon (1) sont rabattables sous le fond (15).

5. Barbecue conforme à l'une des revendications précédentes, caractérisé en ce que l'anse de fermeture (7) est articulée au couvercle (5) accroché à la paroi arrière (11) du réceptacle de charbon (1).

6. Barbecue conforme à l'une des revendications précédentes, caractérisé en ce que les jambes (8, 9) consistent en une paire d'anses de soutien coudées en forme de U dont les extrémités de chacune sont accrochées à deux blocs d'appui (20, 21) prévues sur des côtés opposés, une surface inclinée de butée (24, 29) s'étendant vers l'extérieur, étant prévue à chaque bloc pour une branche (81, 91) de l'anse de soutien associée (8, 9).

7. Barbecue conforme à l'une des revendications précédentes, caractérisé en ce que le couvercle (5) est maintenu accroché par sa paroi arrière (51) au moyen d'une charnière (42).

8. Barbecue conforme à l'une des revendications précédentes, caractérisé en ce que le couvercle (5) joue le rôle d'un second réceptacle de charbon et comprend un second gril (36), le second réceptacle étant basculable à côte du premier réceptacle.

9. Barbecue conforme à la revendication 8, caractérisé en ce que le second réceptacle de charbon (5) est équipé d'au moins deux jambes propres qui sont rabattables sur le fond du second réceptacle.

10. Barbecue conforme à la revendication 8, caractérisé en ce que l'anse de fermeture coudée en forme de U (7) constituant la jambe pour le second réceptacle de charbon est articulée aux bords supérieurs latéraux du couvercle (5) et est applicable par ses deux côtés contre des bords de butée (58) essentiellement verticaux, la longueur des branches (71, 72) de l'anse de fermeture (7) étant sensiblement plus grande que la somme des profondeurs des premier et second réceptacles de charbon.

11. Barbecue conforme à l'une des revendications précédentes, caractérisé en ce que le couvercle (5) est positionnable à une position pratiquement verticale par au moins un dispositif à crochet fixé à une paroi latérale du réceptacle de charbon (1).

12. Barbecue conforme à la revendication 11, caractérisé en ce qu'à chaque face interne latérale du premier réceptacle de charbon (1) est fixé un crochet (67) qui est accrochable à un têton (66) qui dépasse de la face interne latérale respective du couvercle (5).

13. Barbecue conforme à la revendication 12, caractérisé en ce que chaque couvercle (67) est fixé à un premier montant denté (60, 61) qui est relié à la face interne latérale du premier réceptacle de charbon, le gril (3) étant insérable entre chaque paire de dents (62) du premier montant denté.

14. Barbecue conforme à l'une des revendications 8 à 13, caractérisé en ce que chaque têton (66) est fixé à un second montant denté (64) qui est relié à la face interne latérale du second réceptacle de charbon, l'autre gril (36) étant insérable entre chaque paire de dents (65) du second montant denté (64).

15. Barbecue conforme à l'une des revendications 11 à 13 comprenant un dispositif de support pour tournebroche disposé au-dessus du réceptacle de charbon, caractérisé en ce que le crochet est prévu à l'extrémité inférieure d'un bras-support (43, 44) muni d'échancrures (45) ouvertes vers le haut.

16. Barbecue conforme à la revendication 15, caractérisé en ce que le bras-support (43, 44) est articulé au crochet et comprend une échancrure d'arrêt ouverte vers le haut (47) pour s'accrocher au têton (66).

17. Barbecue conforme à l'une des revendications précédentes, caractérisé en ce que le ou les réceptacles de charbon sont en fonte.

Fig.2

44
67'
43 42
65
67
54
64
49 57
48
50
56
32
13 3
61
62
53
16
18
5
34
35
31
33 17
73
71
14
82
91 9 66
7
20
81
12 1
53
8
60 21

0 003 127

6

Fig.1

2

5

31

14

1

7
8
9

Fig. 6

Fig. 4

Fig. 3

Fig.5